# EUROPEAN PATENT SPECIFICATION

(11) **EP 3 282 866 B1**
(45) Date of publication and mention of the grant of the patent: **03.04.2019**
(21) Application number: 16735722.7
(22) Date of filing: 13.04.2016
(51) Int. Cl.: A23J 3/28, A23J 3/22, A23L 29/269

(54) **PROTEIN FIBRES**
PROTEINFASERN
FIBRES PROTÉIQUES

(30) Priority: 14.04.2015 NL 2014641
(43) Date of publication of application: 21.02.2018
(73) Proprietor: Darling Ingredients International Holding B.V., 5691 NM Son (NL)
(72) Inventor: PELSER, Willem Meindert, 5691 NM Son (NL); BEEKMANS, Frederik, 5691 NM Son (NL); VAN DE VELDE, Freddie, 6718 ZB Ede (NL)
(74) Representative: Algemeen Octrooi- en Merkenbureau B.V.
(86) International application number: PCT/NL2016/050256
(87) International publication number: WO 2016/167652

(56) References cited:
- EP-A1- 0 651 948
- WO-A1-03/063607
- JP-A- S5 754 557
- US-A- 4 559 233
- D. A. Suter ET AL: "A METHOD FOR MEASUREMENT OF THE EFFECT OF BLOOD PROTEIN CONCENTRATES ON THE BINDING FORCES IN COOKED GROUND BEEF PATTIES", Journal of Food Science, vol. 41, no. 6, 1 November 1976 (1976-11-01), pages 1428-1432, XP55517766, US ISSN: 0022-1147, DOI: 10.1111/j.1365-2621.1976.tb01188.x

## Description

The invention relates to a method for the preparation of protein fibres from blood plasma, to protein fibres obtainable by such method, to a method of reconstituting such fibres, to the use of such fibres in the preparation of a meat product, to a method for the preparation of such a meat product and to such a meat product.

In the art, meat analog compositions are known, produced from vegetable proteins, such as soy. Such composition can be used as vegetarian meat replacer, but can also be blended with meat. WO2012/051428 describes a structured plant protein product comprising aligned plant protein fibres. WO2008/017039 describes the use of coagulated vegetable protein, such as soy protein, in the preparation of a processed meat products. WO2008/041845 describes the preparation of fibrous food structures by subjecting a vegetable protein solution to simple shear flow and enzymatic crosslinking. US5,626,899 and US5,858,442 describe a vegetable meat extender based on soy protein. WO03/082026 describes vegetable protein isolates, in particular of soy, as meat replacer. The protein isolate is coated with a polysaccharide such as pectin, in order not to negatively affect the taste of the product. US4559233 relates to synthetic meat textures and describes the preparation of edible fibrous protein complexes from whey protein concentrate or fresh cheese whey in order to provide meat-like fibres. To this end, whey protein is mixed with xanthan gum in a weight ratio of 2 - 10 : 1 to a dilute mixture of 0.1 - 4 w/w%, i.e. having a maximum protein content of 3.6 w/w%. The mixture is acidified, resulting in spontaneous formation of fibres without the need of spinning the mixture. The fibres can be stabilized by heat treatment at 70 - 100°C. EP2149306 describes the preparation of whey protein cheese by combining separately heated acid and a basic whey protein isolate solutions, resulting in a cheese like product having the taste, texture and appearance of fresh Mexican cheese. Combining separately heated acid and a basic extracts of turkey meat results in restructured ground turkey meat having a large coarse fibrous structure with high moisture content.

The above protein fibres have however several drawbacks, as nor taste nor texture of meat is obtained. In particular protein fibres of vegetable origin result in unattractive meat surrogates, and replacing a part of the meat by such vegetable protein fibres result in inferior products in view of taste, texture and appearance.

The present inventors have now found a method for the preparation of protein fibres from blood plasma, which fibres can surprisingly replace a significant portion of meat in meat products, in particular minced meat products, without significantly imparting the taste, texture or appearance. In fact, one or more of taste, texture and appearance of meat products wherein a portion of the meat has been replaced by the protein fibres prepared by the method of the invention are comparable in quality to the conventional meat product. Such meat products are significantly reduced in fat content, down to about a fat content of 5 - 7%.

To this end, the invention provides a method for the preparation of protein fibres from blood plasma, comprising the steps of:
a. providing blood plasma proteins,
b. preparing a mixed aqueous medium by mixing, in an aqueous medium, the blood plasma proteins of step a. and a hydrocolloid component in a weight ratio of hydrocolloid component to protein of 1:12 to 1:160, the hydrocolloid component comprising xanthan gum or gellan gum, adducts thereof or a mixture of any thereof,
c. bringing the pH of the mixed aqueous medium of step b. to 3 - 5 by mixing in the mixed aqueous medium of step b. a pH modulating agent to allow fibres to be formed in the medium, therewith providing a protein fibres comprising medium,
d. fixating the protein fibres of the protein fibres comprising medium of step c. to provide a fixed protein fibres comprising medium.

In step a., blood plasma proteins are provided. Blood plasma proteins can be provided in the form of blood, such as fresh blood from slaughtered animals. Preferably, the plasma proteins are provided as plasma, in particular native plasma, i.e. blood, depleted from blood cells, such as by centrifugation. Also concentrated or reconstituted plasma, such as dissolved plasma powder can be used to provide plasma protein. Also plasma fractions can be used, enriched for one or more of plasma proteins. The blood or the plasma is preferably of porcine or bovine origin, where it was observed that plasma proteins from porcine origin tend to result in smaller shaped fibres than those of bovine origin, prepared under identical conditions.

However, as the fibres can be incorporated in meat products of different animals, it can be attractive to use blood plasma that is derived from the same animal species as the meat wherein the fibres are to be incorporated.

Native plasma comprises about 6 - 8 w/w% proteins. However, it is also possible to provide, in step a. a concentrated form of blood plasma, having a protein content, that may be higher than that of native plasma. It is also possible in step a. to provide additional proteins that do not originate from blood plasma, in particular globular proteins having an isoelectric point of above 5.

The main protein constituents of plasma are albumins and globulins, see table 1 (see also Tarté, R. (2009) Ingredients in Meat Products pp. 145-170, Springer Science + Business Media, New York, USA).

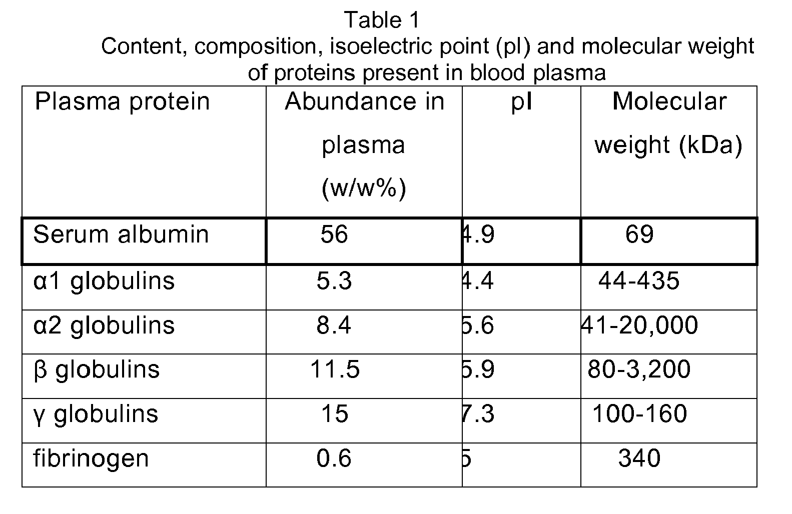

As indicated above, it is also possible to use a plasma fraction, such as a plasma fraction, enriched in fibrinogen, for albumin or for globulin, or to combine two or more of such fractions or to use subfractions thereof.

It is also possible to use plasma proteins that have been partially hydrolysed. In such a case, the skilled person will readily understand that the size of the proteins will have an impact on the fibre structure, and that mild hydrolysis is preferred above stringent hydrolysis, which may lead to loss of fibre formation potential.

In step b., the blood plasma proteins are mixed with a hydrocolloid component comprising xanthan gum or gellan gum to a mixed aqueous medium having a weight ratio of hydrocolloid component to protein of 1:12 to 1:160. The term hydrocolloid component as used herein encompasses hydrocolloid polymers, such as hydrocolloidal polysaccharides such as xanthan gum and gellan gum.

In the mixed aqueous medium, the proteins are solubilized, which means that the proteins exist in true solution, i.e. in a single phase, or in a stabilized dispersion that may separate into two phases after a period of time. In case of a protein dispersion, phase separation should preferably take place later than 1 - 2 hours after preparation. The solubilised protein comprising aqueous mixed medium is preferably a true single phase solution.

It has been found that these negatively charged gums, and adducts thereof, are capable of complex coacervation to occur between the gum and positively charged plasma proteins. Complex coacervation is the separation into two phases in colloidal systems due to electrostatic interaction between two polyelectrolytes, in the present case between the negatively charged gum and the positively charged plasma proteins. A dense coacervate phase, rich in protein fibres, and a diluted equilibrium phase, that consist mainly of the aqueous solvent is generated. Interestingly, it was observed that it was not possible to use alternative negatively charged hydrocolloid polymers, such as the negatively charged polysaccharides pectin, κ-carrageenan, 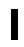 -carrageenan, carboxymethylcellulose or oxidized starch to prepare fibres with plasma proteins.

Xanthan (E number 415) is a water-soluble β-(1,4)-linked repeating pentasaccharide, secreted by the aerobic gram-negative bacterium *Xanthomonas camprestris*, which comprises glucose, mannose and glucuronic acid in a molar ratio of 2:2:1. In aqueous solution, xanthan is negatively charged because of the presence of negatively charged carboxyl groups in the side chains composed of glucuronic acid, mannose and its pyruvate derivative.

Gellan (E number 418) is water-soluble a (α1→3) linked repeating tertrasaccharide produced by the aerobic gram-negative bacterium *Pseudomonas elodea,* which consists of two residues of D-glucose and one of each residues of L-rhamnose and D-glucuronic acid.

Both gums are used in low amounts of e.g. 0.05 - 1 w/w% as viscosifier and thickener. Both gums are stable over a broad pH of 2-12 and at high temperatures of e.g. 100°C.

By a xanthan or gellan adduct a complex of the respective gum with another hydrocolloid is meant, such as carob gum (E410), or any of the above polysaccharides or other food grade gums as known in the art (e.g. E407 - 419, E425 - 427). It is preferred that the adducts comprise at least 60 w/w% gellan or xanthan gum. More preferably, the adducts comprise at least 70, 80, 90 or 95 w/w% gellan or xanthan gum.

The blood plasma proteins can be added in dry form to a solution of the hydrocolloid component, or the hydrocolloid component can be added in dry form to an aqueous solution of plasma proteins, such as native plasma. It is also possible to prepare an aqueous solution of the hydrocolloid component and mix said solution with a plasma protein solution.

The ratio of hydrocolloid component, i.e. xanthan gum, gellan gum and/or adducts thereof and plasma protein is important in the coacervation process. It was surprisingly found that a relatively low weight ratio of 1:12 - 1:160 resulted in optimal coacervation and suitable fibre formation. A lower amount of hydrocolloid component, i.e. above the weight ratio of 1:160, insufficient fibres are formed, whereas at a ratio of below 1:12, the relatively high hydrocolloid content results in a viscous mass that cannot be sufficiently be mixed, impairing the subsequent step of pH modification.

Coacervation takes place between the negatively charged polysaccharides and positively charged proteins from the plasma. This means that the pH of the medium should be below the isoelectric point of the proteins that are envisaged to participate in coacervation in order to produce fibres therefrom. To this end, the pH of the mixed medium of step b. is brought to below the isoelectric point of such proteins, i.e. to a value of 3 - 5, resulting in plasma protein fibre formation. This is performed by mixing in the mixed aqueous medium of step b. a pH modulating agent, such as an acid to allow fibres to be formed in the medium. It is to be noted that the term 'mixing in' is intended to mean that the medium is brought in movement while adding the pH modulating agent, such as subjecting the said medium to shear and/or elongation forces. Without such movement, fibres will tend not to form or to a much lesser extent.

Below a pH of 3, significant denaturation of proteins occurs, impairing the coacervation process, resulting in a low yield of fibres. Above a pH value of 5, a significant portion of the globulins are not positively charged and therefore do not participate in coacervation. Step c. can be performed after or during step b. It is also possible to provide the blood plasma with the envisaged pH value of step c., although it is preferred to modulate the pH after the mixed aqueous medium is prepared by mixing the hydrocolloid component and the blood plasma.

After the fibres being formed in step c., the said fibres need to be subjected to a fixation step d., in order prohibit the fibres formed to return in soluble form, e.g. upon elevation of pH to above the isoelectric point of the respective proteins. The skilled person is aware of known techniques to fixate the protein fibres, such as enzymatic or chemical crosslinking the proteins or aggregating the proteins, optionally a combination of crosslinking and aggregating. Suitable protein crosslinking agents, both food grade and non-food grade are known to the skilled person, see e.g. Thermo Scientific Crosslinking Technical Handbook, Pierce Biotechnology, Inc., 2010. Examples of enzymatic cross-linking agents include oxidoreductases such as lysyl oxidase and peroxidases (e.g. lactoperoxidase, horse radish peroxidase, myeloperoxidase), transglutaminase, laccase, mono amine oxidases, tyrosinase and combinations thereof. Examples of chemical cross-linking agents include dialdehydes (e.g. gluteraldehyde), oleuropein and combinations thereof.

Fixating the protein fibres of the protein fibres comprising medium of step c. provides a fixed protein fibres comprising medium. Said fixed protein fibres comprising medium may also comprise non-fibrous aggregated protein, present as a result of the process. However, the process can provide up to 50 w/w or more fibres, based on the total protein content of the fixed protein fibres comprising medium. The presence of such non fibrous proteins is not a problem, and may even contribute to the functionality of the meat products obtained. It is however possible, but not always necessary, to purify the fibres from the non-fibrous proteins e.g. by centrifuging the coacervate phase before the fixation step d., resulting a fibre pellet and a supernatant comprising the non-fibrous proteins.

It has been found that the obtained protein composition comprising protein fibres can replace a significant portion of meat, used in minced meat or meat dough products, such as hamburgers and sausages, resulting in similar or even improved quality and functionality of the obtained meat product as compared with meat products without replacement by plasma protein fibres, as will be explained in more detail below.

Step a. preferably comprises providing the blood plasma proteins in the form of native plasma. Native blood plasma usually has a protein content of 6 - 8 w/w%, which is preferred. A higher or lower protein content is however allowable. A too low protein content will not result in sufficient fibre formation, whereas a high protein content will result in a very viscous coacervation phase, which impairs further processing of the fibres. It was found that the fibres thus obtained and mixed with minced meat resulted in hamburgers having less fat, but improved juiciness without significant off taste.

As indicated above, the native plasma can be further processed during step a, before being mixed with the hydrocolloid component in step b., e.g. by lowering the pH to the value, envisaged for step c. In such a case, step c. may coincide with step a.

In another preferred embodiment, step a. comprises providing diluted concentrated blood plasma. Concentrated blood plasma can be obtained e.g. by ultrafiltration, nanofiltration or by drying blood plasma partially or completely. In case of complete drying, a plasma powder is obtained, that can be dissolved in an aqueous medium to a desired protein concentration. It was however found that a protein concentration of 20 w/w% resulted in a viscous medium from which it was difficult to generate fibres. Therefore, the diluted concentrated blood plasma preferably has a protein content of less than 15 w/w%, more preferably of less than 10 w/w%, and preferably has a protein content of 6 - 8 w/w%, i.e. corresponding to the protein content of native plasma. It was found that a higher fibre yield was obtained as compared to the use of native plasma, while the fibres appeared to be larger in size. A protein composition comprising protein fibres obtained by using concentrated plasma, in particular derived from plasma powder, and used for the preparation of minced meat products resulted in hamburgers comparable with those prepared from fibres obtained from native blood plasma, with even less off taste and off smell.

It is also possible to combine plasma proteins from different animal origin, such as porcine and bovine plasma protein. Also, proteins of another source than blood plasma can be provided in step a., together with the plasma proteins., i.e. by adding such proteins in native plasma, or by combining such proteins with concentrated plasma. Although proteins of the mixed medium preferably originate from the blood plasma, also other proteins may be added to arrive at the envisaged ratio between protein and hydrocolloid content. In order for such proteins to participate in the fibre formation, proteins are chosen such that the isoelectric point thereof is preferably below the pH of step c. However, the fibres are preferably produced from proteins derived from blood plasma, without addition of proteins of other origin. Therefore, step a. and preferably also steps b., c., and d. comprise less than 50 w/w%, based on the total protein content, proteins originating from another source than blood plasma. The proteins in step a. and preferably also in steps b., c., and d. are preferably free of addition of proteins originating from another source than blood plasma.

In another attractive embodiment, step a. comprises heating of the blood plasma to 45 - 50°C. Such a heating may not only result in an increased fibre yield, but also enables the hydrocolloid component comprising xanthan gum or gellan gum to be directly dissolved in the plasma, without the need to prepare a solution of the xanthan or gellan, which is otherwise preferred as both gellan and xanthan may not dissolve well at low temperatures.

In another preferred embodiment, the hydrocolloid component comprising xanthan gum or gellan gum is provided in step b. as an aqueous solution or dispersion. In order to reduce the risk of protein denaturation and a possible off smell as a result when fibres are produced and incorporated in a meat product, the above-described heating of the blood plasma should preferably avoided. Heating of the plasma is not necessary if the hydrocolloid component comprising xanthan gum or gellan gum is provided as an aqueous solution or dispersion, preferably as aqueous solution, to avoid any possible phase separation. Such an aqueous solution can be prepared by dissolving the xanthan or gellan and/or adducts thereof in water at ambient temperature. Dissolution of xanthan or gellan may be facilitated without loss of functionality at elevated temperature, such as at 80°C.

As indicated above, the hydrocolloid component preferably comprises xanthan gum, gellan gum, adducts thereof or a mixture of any thereof. Although adducts may be preferred in view of cost reduction, it is preferred for reasons of quality and yield of the fibres that the hydrocolloid component comprises only xanthan or gellan without adducts, most preferably xanthan.

The weight ratio of hydrocolloid component to protein in step b. is preferably
1 : 14 - 100, more preferably 1 : 16 - 80, even more preferably 1 : 18 - 60, and particularly preferred 1 : 20 - 50, or 1 : 20 - 40 or 1 : 20 - 30. As indicated above, a lower amount of hydrocolloid component, i.e. at a higher weight ratio, less fibres are formed, whereas at a lower ratio a relative viscous and therefore less processable mass can be obtained. It is however observed that the protein : gum ratio did not have an influence on the fibre yield, whereas thicker fibres were obtained at relatively high protein ratios of 1:24 or higher.

The mixed aqueous medium of step b. preferably comprises 4.0 - 7.4 w/w% of protein. It has been found that when the required amount of hydrocolloid component is added as aqueous solution to a volume of an aqueous solution comprising the plasma proteins in a concentration of 6 - 8 w/w%, such as native plasma, in a fourth volume thereof, i.e. resulting in a dilution of the protein in the mixed aqueous medium to 4.0 - 7.4 w/w% protein, optimal coacervation and fibre formation is observed. Accordingly, such ratios can also be used when combining any of the ingredients from dry matter.

The aqueous mixed aqueous medium of step b. preferably comprises 0.025 - 0.65 w/w%, preferably 0.03 - 0.55 w/w%, of hydrocolloid component, preferably xanthan gum and adducts thereof, more preferably xanthan gum. Less gum results in insufficient fibre formation, whereas higher gum levels may result in undesired high viscosities, as explained above.

Steps a. and b., and preferably also step c., are preferably performed at relatively low temperatures, i.e. at a temperature between 0 - 25°C, preferably at 2 - 15°C, more preferably at 5 - 10°C. Although temperature does not seem to have an impact on fibre yield, thicker fibres prepared at lower temperatures, which may be preferred for fibres to be incorporated in meat products.

In step c., the pH is preferably brought to 3.2 - 4.8, more preferably to 3.5 - 4.5, therewith enabling the majority of the plasma proteins to participate in coacervation, as at such a pH, the majority of the plasma proteins are positively charged, see table 1. The pH is most preferably brought to a value of 4.0.

Preferably, the pH in step c. is brought to the envisaged value, i.e. between 3 and 5, or e.g. between 3.2 and 4.8, between 3.2 and 4.2 or at 4.0, by adding to the mixed medium one or more food grade acids. A strong acid is preferred, limiting dilution of the protein fibres comprising medium and allowing faster processing. In particular strong inorganic acids, such as phosphoric acid, hydrochloric acid, sulphuric acid or nitric acid are contemplated. Also organic acids such as acetic acid and ascorbic acid can be used, or any combination of two or more of any of the above acids. The acid is preferably chosen from the group, consisting of hydrochloric acid, phosphoric acid, and sulphuric acid or a combination of two or more thereof, the acid preferably being hydrochloric acid. It was found that fibres, prepared by using hydrochloric acid for modulating the pH resulted in the most juicy hamburgers with the least off taste.

It was found that on industrial scale attractive fibres were obtained from mixtures wherein the pH is brought to the envisaged value in a relatively short time period of less than 60 minutes, preferably less than 45 minutes, more preferably less than 30 minutes, most preferably less than 15 minutes. Slow addition results in the formation of finer fibres, whereas a fast addition rate leads to much coarser fibres, which is desired for incorporation of the fibres in meat products. To this end, the acid is preferably added to the mixed medium of step b. as a concentrated aqueous solution having a molarity of 0.2 - 5.0 M, preferably of 2 - 4 M. As indicated above, the said acid can also be added during step b. while the mixed medium is prepared, or even during step a. in preparation of an aqueous solution or dispersion comprising plasma protein. As coacervation and therewith fibre formation commences upon drop of the pH value, it is of importance that the acid is added in a homogeneous way, i.e. preferably while the mixed aqueous medium is mixed. Mixing can be performed by suitably rotating one or more mixing elements, such as a peddle in the vessel of the mixed aqueous medium whereto the acid is added. The skilled person will be capable of selecting a suitable mixing element and will also be capable to control the rotation speed of such element and therewith the shear force exerted to the mixed aqueous medium. A high shear force will result in smaller fibres, a too high shear will result in fibre loss. A too low shear force will result in formation of beads instead of fibres. Butterfly shaped mixing paddles are advantageous for rotating mixing elements, giving higher yields in fibre formation as compared to e.g. semi-circular mixing paddles. In continuous preparation processes, the mixed medium can be further mixed by the passing the mixed medium through one or more static mixers, e.g. arranged in the process tubing, where the acid is added to the process stream.

As fibre formation by coacervation is a reversible process, crosslinking is necessary when the pH is increased after fibre formation at low pH. The higher the pH is raised, the more crosslinking is necessary. As indicated above, fixation of the protein fibres in step d. preferably comprises aggregatiing and/or crosslinking the protein fibres of the protein fibres comprising medium of step c. In a preferred embodiment, in particular in batch processes, fixation is performed by heating the protein fibres comprising medium, preferably to a temperature of 50 - 100°C, more preferably of 65 - 90°C, even more preferably of 55 - 85°C and most preferably of 65 - 80°C in a preferred time period of 10 - 60 minutes, preferably 25 - 40 minutes. In continuous processes, heating temperature and residence time at such temperature may be adjusted, is known to the skilled person. Heating results in both aggregating and crosslinking of the protein fibres, as well as aggregating of non-fibrous proteins, i.e. proteins that did not participate in fibre formation. It was found that a fibre preparation obtained after such heating resulted in juicy low-fat hamburgers with minimal off-taste.

In another embodiment, crosslinking can be done by addition of a protein fixation agent, such as a crosslinking agent, e.g. liquid smoke. To this end, liquid smoke is preferably added to 0.5 - 10 w/w%, based on the total weight of the protein fibres comprising medium of step c. Less liquid smoke (0.5 - 1.5 w/w%) was necessary for fixation of the fibres when the pH of the protein fibres comprising medium is increased to or kept at a pH of about 5, whereas a higher amount (7 w/w% or higher) was necessary to fixate fibres with an envisaged final pH of 6.

Although the fixed fibres of step d. can as such be used for incorporation in meat dough for the preparation of meat products such as sausages of hamburgers, the taste of a hamburger thus prepared appeared to taste rather acidic and dry. However, for meat products where an acid taste is envisaged, such fixed fibres can advantageously be used. However, the method preferably further comprises a step e. of bringing the pH of the fixed protein fibres comprising medium of step d. to 5.0 - 8.0, in particular to 5.0 - 7.0. This results in fibres that can optimally be used for the preparation of hamburgers and sausages without significant off-taste. To this end, the pH is preferably brought to 5.5 - 6.5, more preferably to 5.8 - 6.2, i.e. corresponding with the pH of the meat dough, wherein the fibres are envisaged to be incorporated. Preferably, the pH in step e. is brought to the envisaged value by adding to the fixed protein fibres comprising medium one or more food grade bases, preferably chosen from the group, consisting of sodium hydroxide, potassium hydroxide and ammonium hydroxide or a combination of two or more thereof. Sodium hydroxide is most preferred, as it results in the least off taste. Potassium hydroxide may result in a slight bitter taste, which may be desirable for certain meat products as well.

Preferably, the base is added as an aqueous solution having a molarity of 2 - 11.5 M, preferably of 4 - 5 M.

In a particular embodiment, the protein fibres are separated from the medium after fixation of the fibres, and optionally after elevation of the pH. To this end, the method preferably further comprises a step f. comprising separating a fibre containing protein fraction from the fixed protein fibres comprising medium after step d. or e. The fibre containing protein fraction can be obtained by any separation technique, know to the skilled person, such as e.g. sieving or the like. The separating step f. preferably comprises centrifuging the fixed protein fibres comprising medium and removing the supernatant. As discussed above, the fixed protein fibres comprising medium comprises, in addition to the fixed protein fibres, agglomerated non-fibrous proteins, that are separated together with the fixed protein fibres from the medium. It is however possible to obtain a purified fibre containing protein fraction substantially without agglomerated non-fibrous proteins when, after step c. but before step d., the fibres are pelletized from the protein fibres comprising medium, e.g. by centrifugation, while leaving the non-fibrous proteins in the supernatant. In such a case, the pellet can be taken up in an aqueous medium. The said medium may have an envisaged final pH, therewith incorporating a step e. as described above. Said medium can also have an elevated temperature as described above, or may comprise a crosslinking agent such as liquid smoke, allowing the fibres to be fixed upon being taken up in the medium.

In an attractive embodiment, fibres are washed, e.g. after fixation of the fibres, or, preferably, after separation. Water, or an aqueous buffer, in particular a food-grade buffer, having an envisaged pH is the most suitable washing medium. If the fibres are envisaged for incorporation in a meat dough of a particular meat product, a washing medium can be used that comprises (part of) e.g. flavouring ingredients for the said meat dough.

The method as described above provides for a separated protein fibre preparation that preferably comprises 8 - 20 w/w% protein, more preferably 9 - 17 w/w%.

In an attractive embodiment, the method further comprises a step h. of drying the protein fibres, preferably by draining or drying such as drum drying or belt drying. Draining may result in the protein fibres to be concentrated to a moisture content of 70 - 90 w/w%, whereas drying, such as drum drying may result in protein fibres concentrated to a moisture content of below 50 w/w%, below 25 w/w%, below 10 w/w%, or below 5 w/w%. Dried fibres can be stored for a longer time without decay, and be reconstituted by addition of water or any suitable aqueous medium.

The method preferably comprises a final step of freezing the protein composition comprising protein fibres, in particular the composition in wet or drain dried form, i.e. having a moisture content of 70 w/w% or more, preferably of 70 - 90 w/w%. By such a freezing step, the protein composition comprising fibres can be provided as frozen blocks, a form also used to provide meat, to be used for meat products where the fibres containing protein composition can replace part of the meat. For the meat processing industry, such frozen blocks can optimally be incorporated in existing processing lines.

The invention further relates to a protein composition comprising protein fibres from blood plasma, obtainable by the above-described method. The said composition preferably has a moisture content of 70 - 90 w/w%, i.e. is preferably concentrated, such as drain dried. In another embodiment, the protein composition has a moisture of below 70 w/w%, preferably below 50 w/w%, more preferably below 25 w/w%, even more preferably below 10 w/w%, most preferably below 5 w/w%.

The protein composition preferably comprises 20 - 50 w/w% protein fibres, or 30 - 45 w/w% based on the total protein content of the composition. The remainder of the protein e.g. comprises aggregates of proteins or otherwise cross-linked proteins that did not form fibres during the acidification step.

In another aspect the invention provides a method of reconstituting a protein composition comprising protein fibres having a moisture content of 70 - 90 w/w%, comprising the step of rehydrating the protein composition having a moisture of below 70 w/w%, preferably below 50 w/w%, more preferably below 25 w/w%, even more preferably below 10 w/w%, most preferably below 5 w/w%. As indicated above, a concentrated or dried protein composition comprising plasma protein fibres can be reconstituted to a 'wet' protein composition of 70 - 90 w/w% moisture by rehydration of the dried protein composition.

In a particular embodiment, the invention relates to the use of protein fibres derived from blood plasma for the preparation of a meat product, wherein the protein fibres are a protein composition according to the invention or reconstituted protein composition as obtained by the method of the invention for the preparation of a meat product, in particular a meat product prepared from a meat dough, such as minced meat products and sausages. To this end, the invention also relates to the use of a protein composition as described herein, or a reconstituted protein composition as described above for the preparation of a meat product, preferably a minced meat or sausage product. The said protein composition preferably comprises both protein fibres as well as non fibrous protein, both derived from plasma.

The invention also relates to a method for the preparation of a meat product, comprising mixing the protein composition or reconstituted protein composition as described above in meat dough.

Also, the invention relates to a meat product, comprising a protein composition comprising blood plasma protein fibres or reconstituted protein fibres as described above. It has been surprisingly found that such blood plasma protein fibres comprising protein composition can be incorporated in meat products, resulting in low-fat meat products having improved juiciness and bite, while maintaining the envisaged meat taste. The weight ratio meat : protein composition is preferably 95 - 20 : 5 - 80, more preferably 85 - 40 : 15 - 60, even more preferably 80 - 65 : 20 - 35 and most preferably 75 - 70 : 25 - 30. It was found that in minced meat products, up to 40 w/w% of the meat could be replaced by the above-described protein fibres comprising protein composition, preferably about 20 - 35 w/w% without imparting on taste, texture and appearance of the final meat product. In fact, improved juiciness and bite was observed, in particular when low fat minced meat (with a fat content of 10 w/w%) was used. This type of minced meat is known for the drawback of being a bit dry and crumbly, whereas replacement of 30 to 40 w/w% of the said low fat minced meat by a plasma protein fibres comprising protein composition of the invention resulted in an optimal minced meat product having an improved an attractive juiciness and improved coherent texture.

As up to 40 w/w% or even more of the meat can be replaced by the above-described fat free composition comprising plasma protein fibres, the invention provides for a meat product, having a fat content of 5 - 7 w/w %. Such a meat product can be a meat dough, ready to be further processed into a final product, such a hamburgers, or sausages, or can be a final meat product, such as hamburgers or sausages.

The invention will now be further explained by way of the following examples.

### Examples

### Material and methods

Plasma fit for human consumption: Bovine and porcine (Sonac Loenen B.V., Loenen, the Netherlands)
Concentrated plasma: Sonac Loenen B.V., Loenen, the Netherlands
Xanthan: 1% solution Keltrol T (CP Kelco, US) or 0.5% Carrastab 16-08 (Caldic, Oudewater, the Netherlands)
Liquid smoke: Zesti Natursol Premium Plus High pH RD1102 (Ruitenberg, Twello, Netherlands)
Meat: Minced beef meat having 10 w/w% fat (Keurslagerij Elings, Wageningen, the Netherlands)
Albumin from porcine serum: lyophilized powder, 96-99%, A2764 (Sigma-Aldrich, US)
Fibrinogen concentrate (porcine): Sonac Loenen B.V., Loenen, The Netherlands

### Example 1

### Production of large bovine plasma fibres, fixation by heat

### Preparation of Plasma-Xanthan mixture

1660 kg bovine plasma kept at 5°C was mixed for 30 minutes with 415 kg 1%-xanthan solution having ambient temperature in a 3000 L double jacket tank (model 0/700, Mueller, The Netherlands) using a high speed mixer (Rotomaster DSM 1100 S/V1-3/GF/OSB, 3000 rpm, paddle diameter of 87 mm, Gronfa Procestechniek B.V., Netherlands) mounted in the said tank.

From this mixed aqueous plasma-xanthan-medium, 300 kg was collected in a 500 L double jacket tank (diameter of 100 cm, height of 65 cm). In a time period of 5 minutes, 16.2 kg of an aqueous 2M HCI solution was poured to the mixture during moderate mixing at ambient temperature (moon-shaper stirrer, diameter of 80 cm with a surface of 750 cm² at 20 rpm) to obtain a pH of ± 3.9. With 'moon shaped' the shape of the illuminated moon during the last quarter, i.e. 'waning crescent' is mentioned, where the paddle is mounted in the tank with the two tips facing up.

Relatively large fibres of 4-6 cm in length were formed during acidification and remained intact during mixing. The protein fibres in the obtained protein fibres comprising medium were fixed by circulating water of 85°C between the two jackets of the tank. Directly after reaching the 65°C (in about 45 minutes) the fixed protein fibres comprising medium that comprises both fixed plasma protein fibres and non-fibrous aggregated plasma proteins was cooled down to ± 10°C by circulating ice water. In a time period of 10 minutes, 4.2 kg of an aqueous 4.1 M NaOH solution was slowly poured to the plasma fibres to obtain a pH of ± 5.8 under the same mixing conditions as described for example 1. A 1 kg portion of the obtained fixed protein fibres comprising medium was centrifuged for 20 min. at 4500 rpm with a Hermle Z383k to obtain a separated protein preparation comprising both the fixed fibres as well as non-fibrous plasma proteins in aggregated form in the pellet. The obtained pellet comprising both fibre protein and aggregated protein, and the obtained supernatant were analysed on dry matter and protein content (see Table 1). It was observed that the protein content increased upon elevation of the centrifugation speed and vice versa.

The protein content of fibre containing pellet was determined using the Kjeldahl method using a nitrogen conversion factor of 6.25. Dry matter content was determined by drying at 102°C until a constant weight was observed.

### Example 2

### Production of small bovine plasma fibres, fixation by heat

To the remaining 1775 kg of the plasma-xanthan-mixture of example 1, 80.8 kg HCl (2 M) was poured slowly (within 20 min.) in the 3000L double jacket tank while being mixed using the high speed mixer as described in example 1 to obtain a pH of ± 3.9. The formed protein fibres in the protein fibres comprising medium were directly cut to small fibres of 1-2 cm due to the high speed mixing conditions. 300 Kg fibres were collected in a 500 L double jacket tank. The protein fibres comprising medium was heated from 23 °C to 65 °C in 35 minutes by circulating water of a temperature of 85°C between the jackets to fix the fibres. Directly after reaching the 65°C, the plasma fibres were cooled down to ± 10°C by circulating ice water. In a time period of 10 minutes, 4 kg 4.1 M NaOH was slowly poured to the fixed plasma fibres comprising medium to obtain a pH of ± 5.8 under the same conditions as described for example 1. A portion of the fixed fibres were centrifuged for 20 min. at 4500 rpm with a Hermle Z383k as described in example 1. The obtained fibres and supernatant were analysed on dry matter and protein content as described above, see Table 1.

**Table I: Dry matter and protein content**

| | Fibres (Example 1) | | Fibres (Example 2) | | Minced beef meat |
|---|---|---|---|---|---|
| | Fibres (%) | Supernatant (%) | Fibres (%) | Supernatant (%) | |
| Weight | 50 | 50 | 35 | 65 | x |
| Dry matter | 12.3 | 2.7 | 16.1 | 2.7 | 33.6 |
| Protein | 9.8 | 0.6 | 13.7 | 0.6 | 22.3 |

### Example 3

### Production of porcine plasma fibres, fixation by heat

A scaled-down protocol as described for example 1 was followed, where 300 kg of a plasma-xanthan-mixture was prepared by mixing 240 kg porcine plasma with 60 kg 1%-xanthan (Keltrol T) solution. Similar yields were obtained, however, the fibres had a length of 1 - 2 cm and appeared to be thinner than fibres of bovine origin, obtained under similar conditions.

### Example 4

### Production of fibres from plasma fractions, serum albumin and fibrinogen concentrate

30 g serum albumin powder was dissolved at ambient temperature in 470 ml deionized water. 500 g serum albumin solution was mixed for 15 minutes with 125 g 1%-xanthan solution having ambient temperature in a 1 L beaker using a mixer (Cat R100CT, butterfly-stirrer, 300 rpm). In a time period of 1 minute, 34 g of 2M HCl solution was poured to the mixture during mixing at ambient temperature (Cat R100CT, butterfly-stirrer, 500 rpm) to obtain a pH of 3.9. The obtained fibres were fixed by putting the beaker with the protein fibres comprising medium in a water bath of 85°C for 30 minutes. The fixed fibres and non-fibrous aggregated proteins were cooled down to ambient temperature by keeping the beaker for 30 minutes in ice water. In a time period of 5 minutes, 9 g of 4.1M NaOH solution mixed under the same mixing conditions as the acidification step with the plasma fibres to obtain a pH of 5.8. The obtained fixed protein fibres comprising medium was centrifuged for 20 minutes at 4500 rpm with a Hermle Z383k. 500 g fibrinogen concentrate was processed into fibres under similar conditions as the serum albumin. The yields and obtained fibres were similar and also comparable to the plasma fibres obtained in example 3.

### Example 5

### Production of bovine plasma fibres, fixation by crosslinking agent

A scaled-down protocol as described for example 1 was followed, where a similar mixture of bovine plasma and xanthan was prepared. Instead of heating to 65°C, liquid smoke was added to a final concentration of 1, 7 and 10 w/w%. It appeared that the fibre yield was slightly less than that when heating was applied for fibre fixation. Fibres fixed with 1 w/w% liquid smoke were able to retain their structure upon neutralisation to a pH of 5.0. To retain structure at higher pH of 5.5, 5.8 or 6.0, higher concentrations of liquid smoke were required.

### Example 6

### Hamburger formation

30% of minced beef meat having a low fat content of 10% was replaced by "big" and by "small" plasma protein fibres of examples 1 and 2, respectively. The fibres were mixed for 1 minute at level 1 and 1 minute at level 2 in a Hobart mixer. Per 100 grams of product (meat and fibres), 1.0 g salt, 0.2 g white pepper, 0.1 g nutmeg, 0.05 g mace and 0.05 g ascorbic acid was added. Thus spiced burgers of ± 100 g were formed using a press (diameter 8.5 cm) and grilled for 7 minutes at 200 °C. Before and after grilling the burgers were weighted to determine the weight loss during grilling (see Table 2). Texture of the meat dough and of burgers prepared therewith was analysed and compared to meat dough and burgers prepared from minced meat without replacement. 5 Assessors were asked to evaluate the different burgers as compared to a reference, prepared with minced meat without replacement.

The fibres, supernatant and the minced meat were analysed on dry matter and protein content (see Table 1).

Replacing 30 w/w% of meat by both "big" and "small" fibres resulted in a bit more sticky meat dough as compared to a reference dough, prepared from minced meat having a low fat content of 10 w/w%. No difference in handling between the meat replaced by "big/wet" fibres and "small/dry" fibres were noticed. Replacing 20 w/w% of the meat by big fibres resulted in more weight loss and to a less juicy product as compared to hamburgers, prepared from minced meat without fibre replacement. This was also observed when using meat having a fat content of 20 w/w% as compared to low fat meat (10 w/w%). Replacing 40 w/w% of the meat resulted in less firm burgers.

The weight loss after grilling for 7 minutes at 200 °C was determined for hamburgers, prepared from the above reference meat dough, and of the example meat doughs wherein 30 w/w% of the minced meat was replaced by big or small fibres respectively (see Table 2).

**Table 2: cooking/baking losses**

| | Before grilling | After grilling | Weight loss (%) |
|---|---|---|---|
| Reference Hamburger | 99.4 | 76.5 | 23 |
| Hamburger (fibres Ex.1) | 98.2 | 79.4 | 19 |
| Hamburger (fibres Ex. 2) | 98.5 | 84.0 | 15 |

The three different hamburgers were evaluated by 5 assessors. No off-flavour like "liver" taste or blood taste was experienced. The hamburger with replacement of meat by "big" fibres resulted in increased and more attractive juiciness as compared both to the reference and, surprisingly, to the hamburger with replacement of meat by "small" fibres, although the latter showed the lowest weight loss.

### Example 7

### Effect of neutralisation of pH after fibre fixation by sodium and potassium

The effect of elevation of the pH value was evaluated by preparing burgers from meat dough according to example 6, using fibres as obtained by example 1, wherein the neutralisation step comprises either addition of sodium hydroxide as described, or of a corresponding molar amount of potassium hydroxide, or where the neutralisation step was omitted.

It was observed that without neutralisation after fibre fixation with acid, burgers could be obtained with similar protein and fibre content as compared with burgers, prepared from meat dough comprising neutralised fibres. The same is true when potassium hydroxide instead of sodium hydroxide was used for increasing the pH. However, without increasing the pH (i.e. without addition of a hydroxide after fibre fixation), burgers were obtained with a pronounced acid taste, whereas those, prepared with potassium hydroxide appeared to have a more pronounced bitter taste as compared to those, prepared according to examples 1 using sodium hydroxide.

### Example 8

### Amount of xanthan

Example 1, scaled down as in example 3 was performed with half of the relative xanthan amount, by adding the same volume of a 0.5 w/w% xanthan solution (Carrastab 16-08). The fibres were similar as obtained under similar conditions with 1 w/w% xanthan (Keltrol T). It was observed that less shear was needed during acidification to obtain similar fibres. It was generally observed that a higher yield and thicker fibres were formed with a higher protein : gum ratio.

### Example 9

### Hamburger formation on production scale

17 kg (25%) of frozen beef trimmings 80/20, 33 kg (50%) of fresh beef trimmings 80/20 and 17 kg (25%) of frozen plasma fibres of example 1 were grinded through a 22 mm plate with a CFS Auto Mince 280 grinder. The grinded beef trimmings and plasma fibres were mixed for 3 minutes with 3 kg of a seasoning mixture and grinded through a 3 mm plate with an Automatic Mixer Grinder (ULTRA MONO, MEW 723-B98/E32, Mado GmbH, Germany). The spiced meat was formed into 100 g burgers with a Townsend RevoPortioner (Marel., Iceland)

Replacing of 25% w/w% of beef trimmings 80/20 by frozen plasma fibres resulted in hamburgers of comparable quality as those, prepared under similar conditions prepared from minced meat without replacement.

### Example 10

### Gellan gum

Example 1, scaled down as in example 3 was performed with a 1 w/w % gellan solution instead of a 1 w/w% xanthan solution. Similar fibre formation was observed.

### Example 11

### Dry plasma powder as starting material

Example 1, scaled down as in example 3 was performed with reconstituted plasma from dried plasma. It was observed that reconstitution to about original protein content, i.e. to about 6 - 8 w/w% resulted in the most optimal fibre formation. A plasma concentrate having a protein content of 20 w/w% resulted in a viscous medium, difficult to mix during the acidification step. Burgers, produced from low fat meat with 30 w/w% replacement by reconstituted plasma (6.5 w/w% protein content) had no off-taste.

### Example 12

### Preheating the plasma

Example 1, scaled down as in example 3 was performed with bovine plasma that was preheated for 10 minutes at 50°C. An increased fibre yield was observed. The example was repeated and 600 g xanthan was dissolved in 240 kg plasma, resulting in similar fibres as compared to adding the xanthan as a 1 w/w% solution.

### Example 13

### Cooling plasma

Example 1, scaled down as in example 3 was performed with bovine plasma that was cooled to about 7°C, relatively thicker fibres were obtained as compared to fibres, produced from plasma kept at room temperature.

### Example 14

### Further processing of fibres

Fibres obtained according to example 1 were drained instead of being centrifuged. This resulted in a protein content of about 5 w/w%. As indicated above, centrifuging resulted in a protein content of about 10-14 w/w%.

The centrifuged fibres were further dried until a dry matter content of 95 w/w% and was kept in a light tight container for 1 month at ambient temperature. The dried fibres were reconstituted by adding water to a 13 w/w% solution, and the fibres were used for burger preparation according to example 4. Evaluation by 5 assessors revealed a somewhat impaired organoleptic quality, but no, significant additional differences were observed as compared to burgers, prepared from fresh fibres.

### Example 15

### Mixing the medium by a static mixer

Example 1, scaled down as in example 3 was performed while the plasma-xanthan-mixture was allowed to flow through metal transport tubing comprising a static mixing element in the form of two oppositely facing u shaped plate elements, positioned perpendicular to the process stream in the tubing, providing a H-shaped passage through the tubing. HCl was added upstream of the mixing element. Fibre formation was observed downstream of the mixing element.

### Example 16

### Preparation of cooked sausage

7.5% and 15% of a cooked sausage meat dough (farce: 12.6 w/w%, water/ice, lean 90-10, cheeks 50-50 3mm, 6% spices, dough: 18.8w/w% lean 90-10 3mm, cheeks 50-50 3mm) having a fat content of 25% was replaced by plasma protein fibres of example 1. The meat dough and fibres were mixed manually. Casings of 25mm were filled with meat dough by a machine (Sausage stuffer 30 LB, F Dick, Deizisau, Germany) and pressure was applied when closing the casing with the clipper (Technopack alpine, Tipper Tie Inc. Apex, NC, USA). After filling the casings the sausage were cooked in a water bath at 78°C for 15 minutes. After the cooking the sausages were cooled in melting ice and stored at 5°C overnight before analysing.

The addition of fibres resulted in higher fraction stress for both variants, whereby the 7.5% addition of fibres resulted in a slightly lower value than the 15% addition. Higher meat replacement by fibres resulted in less weight loss and a more juicy product. The variants were evaluated by 5 assessors. No off-flavour like "liver" taste or blood taste was experienced.

## Claims

1. Method for the preparation of a protein composition comprising protein fibres from blood plasma, comprising the steps of:
a. providing blood plasma proteins,
b. preparing a mixed aqueous medium by mixing, in an aqueous medium, the blood plasma proteins of step a. and a hydrocolloid component in a weight ratio of hydrocolloid component to protein of 1:12 to 1:160, the hydrocolloid component comprising xanthan gum, gellan gum, adducts thereof or a mixture of any thereof,
c. bringing the pH of the mixed aqueous medium of step b. to 3 - 5 by mixing in the mixed aqueous medium of step b. a pH modulating agent to allow fibres to be formed in the medium, therewith providing a protein fibres comprising medium,
d. fixating the protein fibres of the protein fibres comprising medium of step c. to provide a fixed protein fibres comprising medium.

2. Method according to claim 1, wherein:
- step a. comprises providing native blood plasma, and/or
- step a. comprises providing diluted concentrated blood plasma, preferably having a protein content of 6 - 8 w/w%, and/or
- the proteins in step a. and preferably also in steps b., c., and d. comprise less than 50 w/w%, based on the total protein content, proteins originating from another source than blood plasma, the said steps preferably being free of such proteins, and/or
- step a. comprises heating of the blood plasma to 65 - 75°C, preferably to 70°C.

3. Method of any of the preceding claims, wherein
- in step b. the hydrocolloid component comprising xanthan gum or gellan gum is provided as an aqueous solution or dispersion, and/or
- in step b. the hydrocolloid component is admixed as an aqueous solution, and/or
- the weight ratio of hydrocolloid component to protein in step b. is 1 : 14 - 100, preferably 1 : 16 - 80, more preferably 1 : 18 - 60, most preferably 1 : 20 - 50, and/or
- the mixed aqueous medium of step b. comprises 4.0 - 7.4 w/w% of protein, and/or
- wherein the mixed aqueous medium of step b. comprises 0.025 - 0.65 w/w%, preferably 0.03 - 0.55 w/w% of hydrocolloid component, preferably xanthan gum and adducts thereof, more preferably xanthan gum.

4. Method of any of the preceding claims wherein steps a. and b. and preferably also step c. are performed at a temperature between 0 - 25°C, preferably at 2 - 15°C, more preferably at 5 - 10°C.

5. Method of any of the preceding claims wherein:
- the pH in step c. is brought to 3.5 - 4.5, and/or
- the pH in step c. is brought to the envisaged value by adding to the mixed aqueous medium one or more food grade acids, preferably chosen from the group, consisting of hydrochloric acid, phosphoric acid, sulphuric acid or a combination of two or more thereof, the acid preferably being hydrochloric acid, adding the food grade acid preferably being performed in a time period of less than 60 minutes, preferably of less than 45 minutes, more preferably of less than 30 minutes and even more preferably of less than 15 minutes, and/or
- the acid is added as an aqueous solution having a molarity of 0.2 - 5.0 M, preferably of 2 - 4 M, and/or
- mixing the mixed aqueous medium in step c. is performed by stirring the medium, preferably by a rotating stirrer or passed through a static mixer.

6. Method of any of the preceding claims wherein
- fixation of the protein fibres in step d. comprises aggregating and/or crosslinking the protein fibres of the protein fibres comprising medium of step c, and/or
- wherein fixation step d. comprises heating of the protein fibres comprising medium of step c. to 50 - 100°C, preferably to 65 - 80°C, and/or
- wherein in step d. the protein fibres comprising medium is heated for 10 - 60 minutes, preferably for 25 - 40 minutes, and/or
- wherein the protein fibres comprising medium of step c. is cross-linked by addition of a protein crosslinking agent to the protein fibres comprising medium, the protein crosslinking agent preferably comprising liquid smoke, the liquid smoke preferably being added to 0.5
- 10 w/w%, based on the total weight of the protein fibres comprising medium of step c.

7. Method of any of the preceding claims, further comprising a step e. of bringing the pH of the fixed protein fibres comprising medium of step d. to 5.0 - 8.0, preferably to 5.5 - 6.5, more preferably to 5.8 - 6.2,
- the pH in step e. preferably being brought to the envisaged value by adding to the fixed protein fibres comprising medium one or more food grade bases, preferably chosen from the group, consisting of sodium hydroxide, potassium hydroxide and ammonium hydroxide or a combination of two or more thereof, the base preferably being added as an aqueous solution having a molarity of 2 - 11.5 M, preferably of 4 - 5 M.

8. Method of any of the preceding claims, further comprising a step f. comprising separating a protein fibres containing protein fraction form the fixed protein fibres comprising medium after step d. or e.
- the separating step f. preferably comprising centrifuging the fixed protein fibres comprising medium and removing the supernatant, and/or
- the separated protein fibre preparation preferably comprising 8 - 20 w/w% protein, more preferably 9 - 17 w/w%.

9. Method of any of the preceding claims, wherein the method further comprises:
- a step g. of washing the protein fibres,
and/or
- a step h. of drying the protein fibres,
- the drying step preferably comprising draining, drum drying or belt drying,
- the protein fibres in step h. preferably being concentrated to a moisture content of 70 - 90 w/w%, preferably of below 50 w/w%, more preferably below 25 w/w%, even more preferably below 10 w/w%, most preferably to below 5 w/w%.
and/or
- a final step of freezing the protein composition comprising protein fibres.

10. Protein composition comprising protein fibres from blood plasma, obtainable by the method according to any of the preceding claims,
- the composition preferably having a moisture content of:
- 70 - 90 w/w%, or
- of below 70 w/w%, preferably below 50 w/w%, more preferably below 25 w/w%, even more preferably below 10 w/w%, most preferably below 5 w/w%,
- the composition preferably having comprising 8 - 20 w/w protein, preferably 9 - 17 w/w%.

11. Method of reconstituting a protein composition comprising protein fibres having a moisture content of 70 - 90 w/w% comprising the step of rehydrating the protein composition of claim 10, said composition having a moisture content of below 70 w/w%, preferably below 50 w/w%, more preferably below 25 w/w%, even more preferably below 10 w/w%, most preferably below 5 w/w% prior to rehydrating.

12. Use of protein fibres derived from blood plasma for the preparation of a meat product, wherein the protein fibres are a protein composition of claim 10 or reconstituted protein composition as obtained by the method of claim 11 for the preparation of a meat product, preferably a minced meat or sausage product.

13. Method for the preparation of a meat product, comprising mixing the protein composition of claim 10 or reconstituted protein composition as obtained by the method of claim 11 in meat dough.

14. Meat product, comprising the protein composition of claim 10 or reconstituted protein composition obtained by the method of claim 11,
- the weight ratio meat : protein composition preferably being 95 - 20 : 5 - 80, more preferably 85 - 40 : 15 - 60, even more preferably 80 - 65 : 20 - 35, most preferably 75 - 70 : 25 - 30,
- preferably having a fat content of 5 - 7 w/w%.

## Patentansprüche

1. Verfahren zum Herstellen einer Proteinzusammensetzung, die Proteinfasern aus Blutplasma umfasst, das die folgenden Schritte umfasst:
a. Bereitstellen von Blutplasmaproteinen,
b. Herstellen eines gemischten wässrigen Mediums durch Vermischen der Blutplasmaproteine aus Schritt a und eines Hydrokolloidbestandteils im Gewichtsverhältnis des Hydrokolloidbestandteils zum Protein von 1:12 bis 1:160 in einem wässrigen Medium, wobei der Hydrokolloidbestandteil aus Xanthan, Gellan, Addukten derselben oder einer Mischung derselben besteht,
c. Einstellen des pH-Werts des gemischten wässrigen Mediums aus Schritt b auf 3-5, indem in das gemischte wässrige Medium aus Schritt b ein pH-Wert regulierender Wirkstoff gemischt wird, um es zu ermöglichen, dass sich Fasern im Medium ausbilden, wodurch ein Medium bereitgestellt wird, das Proteinfasern enthält,
d. Fixieren der Proteinfasern des Mediums aus Schritt c, das Proteinfasern enthält, um ein fixierte Proteinfasern enthaltenes Medium bereitzustellen.

2. Verfahren nach Anspruch 1, wobei:
- Schritt a das Bereitstellen von nativem Blutplasma umfasst und/oder
- Schritt a das Bereitstellen von verdünntem konzentriertem Blutplasma umfasst, vorzugsweise mit einem Proteingehalt von 6-8 Gew.-%, und/oder
- die Proteine in Schritt a und vorzugsweise ebenfalls in Schritt b, c und d ausgehend vom gesamten Proteingehalt weniger als 50 Gew.-% umfassen, die Proteine aus einer anderen Quelle als Blutplasma stammen, die Schritte vorzugsweise frei von diesen Proteinen sind und/oder
- Schritt a das Erhitzen des Blutplasmas auf 65-75 °C, vorzugsweise auf 70 °C umfasst.

3. Verfahren nach einem der vorhergehenden Ansprüche, wobei
- in Schritt b der Hydrokolloidbestandteil, der Xanthan oder Gellan enthält, als eine wässrige Lösung oder Dispersion zur Verfügung gestellt wird und/oder
- in Schritt b der Hydrokolloidbestandteil als eine wässrige Lösung beigemischt wird und/oder
- das Gewichtsverhältnis des Hydrokolloidbestandteils zum Protein in Schritt b 1:14-100, vorzugsweise 1:16-80, besser noch 1:18-60, am besten 1:20-50 beträgt und/oder
- das gemischte wässrige Medium aus Schritt b 4,0-7,4 Gew.-% Protein enthält und/oder
- wobei das gemischte wässrige Medium aus Schritt b 0,025-0,65 Gew.-%, vorzugsweise 0,03-0,55 Gew.-% des Hydrokolloidbestandteils, vorzugsweise Xanthan und Addukte desselben, besser noch Xanthan, enthält.

4. Verfahren nach einem der vorhergehenden Ansprüche, wobei die Schritte a und b sowie vorzugsweise auch Schritt c bei einer Temperatur zwischen 0-25 °C, vorzugsweise bei 2-15 °C, besser noch bei 5-10 °C ausgeführt werden.

5. Verfahren nach einem der vorhergehenden Ansprüche, wobei:
- der pH-Wert in Schritt c auf 3,5-4,5 eingestellt wird und/oder
- der pH-Wert in Schritt c durch Zugeben von einer oder mehreren lebensmittelverträglichen Säuren zum gemischten wässrigen Medium auf den vorgesehenen Wert eingestellt wird, wobei die Säure vorzugsweise aus der Gruppe bestehend aus Salzsäure, Phosphorsäure, Schwefelsäure oder einer Kombination von zwei oder mehreren derselben gewählt wird, die Säure vorzugsweise Salzsäure ist, die Zugabe der lebensmittelverträglichen Säure vorzugsweise in einer Zeitspanne von weniger als 60 Minuten, vorzugsweise weniger als 45 Minuten, besser noch weniger als 30 Minuten und noch besser weniger als 15 Minuten erfolgt und/oder
- die Säure als wässrige Lösung mit einer Molarität von 0,2-5,0 M, vorzugsweise 2-4 M zugegeben wird und/oder
- das Vermischen des gemischten wässrigen Mediums in Schritt c durch Rühren des Mediums erfolgt, vorzugsweise mittels eines rotierenden Rührwerks oder Durchlaufens eines Statikmixers.

6. Verfahren nach einem der vorhergehenden Ansprüche, wobei
- das Fixieren der Proteinfasern in Schritt d das Verbinden und/oder Vernetzen der Proteinfasern des Proteinfasern enthaltenden Mediums aus Schritt c umfasst und/oder
- wobei der Fixierungsschritt d das Erhitzen des Proteinfasern enthaltenden Mediums aus Schritt c auf 50-100 °C, vorzugsweise auf 65-80 °C, umfasst und/oder
- wobei in Schritt d das Proteinfasern enthaltende Medium für 10-60 Minuten, vorzugsweise für 25-40 Minuten erhitzt wird und/oder
- wobei das Proteinfasern enthaltende Medium aus Schritt c durch Zugeben eines Proteinvernetzungsmittels zum Proteinfasern enthaltenden Medium vernetzt wird und das Proteinvernetzungsmittel vorzugsweise Flüssigrauch enthält, wobei der Flüssigrauch vorzugsweise mit 0,5-10 Gew.-%, ausgehend vom Gesamtgewicht des Proteinfasern enthaltenden Mediums aus Schritt c, zugesetzt wird.

7. Verfahren nach einem der vorhergehenden Ansprüche, ferner einen Schritt e umfassend, bei dem der pH-Wert des fixierte Proteinfasern enthaltenden Mediums aus Schritt d auf 5,0-8,0, vorzugsweise auf 5,5-6,5, besser noch auf 5,8-6,2 eingestellt wird,
- der pH-Wert in Schritt e vorzugsweise durch Zugeben von einer oder mehreren lebensmittelverträglichen Basen zum fixierte Proteinfasern enthaltenden Medium auf den vorgesehenen Wert eingestellt wird, wobei die Base vorzugsweise aus der Gruppe bestehend aus Natronlauge, Kaliumhydroxid und Ammoniumhydroxid oder einer Kombination von zwei oder mehreren derselben gewählt wird und die Base vorzugsweise als eine wässrige Lösung mit einer Molarität von 2-11,5 M, vorzugsweise von 4-5 M zugegeben wird.

8. Verfahren nach einem der vorhergehenden Ansprüche, ferner einen Schritt f umfassend, der das Trennen einer Proteinfasern enthaltenden Proteinfraktion vom fixierte Proteinfasern enthaltenden Medium nach Schritt d oder e umfasst,
- wobei der Trennschritt f vorzugsweise das Zentrifugieren des fixierte Proteinfasern enthaltenden Mediums und Entfernen des Überstands umfasst und/oder
- das getrennte Proteinfaserpräparat vorzugsweise 8-20 Gew.-%, besser noch 9-17 Gew.-% Protein enthält.

9. Verfahren nach einem der vorhergehenden Ansprüche, wobei das Verfahren ferner Folgendes umfasst:
- einen Schritt g des Waschens der Proteinfasern
und/oder
- einen Schritt h des Trocknens der Proteinfasern,
- wobei der Trocknungsschritt vorzugsweise Abtropfen, Trommeltrocknung oder Bandtrocknung umfasst,
- die Proteinfasern in Schritt h vorzugsweise auf einen Feuchtigkeitsgehalt von 70-90 Gew.-%, vorzugsweise auf unter 50 Gew.-%, besser noch auf unter 25 Gew.-%, noch besser auf unter 10 Gew.-% und am besten auf unter 5 Gew.-% konzentriert werden,
und/oder
- einen letzten Schritt des Einfrierens der Proteinzusammensetzung, die Proteinfasern enthält.

10. Proteinzusammensetzung, die Proteinfasern aus Blutplasma enthält und nach dem Verfahren nach einem der vorhergehenden Ansprüche erhaltbar ist, wobei
- die Zusammensetzung vorzugsweise einen Feuchtigkeitsgehalt von
- 70-90 Gew.-% oder
- unter 70 Gew.-%, vorzugsweise unter 50 Gew.-%, besser noch unter 25 Gew.-%, noch besser unter 10 Gew.-%, am besten unter 5 Gew.-% aufweist,
- die Zusammensetzung vorzugsweise 8-20 Gew.-%, vorzugsweise 9-17 Gew.-% Protein enthält.

11. Verfahren des Wiederherstellens einer Proteinzusammensetzung, die Proteinfasern mit einem Feuchtigkeitsgehalt von 70-90 Gew.-% enthält, den Schritt des Rehydrierens der Proteinzusammensetzung aus Anspruch 10 umfassend, wobei die Zusammensetzung vor dem Rehydrieren einen Feuchtigkeitsgehalt von unter 70 Gew.-%, vorzugsweise von unter 50 Gew.-%, besser noch von unter 25 Gew.-%, noch besser von unter 10 Gew.-%, am besten von unter 5 Gew.-% aufweist.

12. Verwenden der aus Blutplasma gewonnenen Proteinfasern für die Herstellung eines Fleischprodukts, wobei die Proteinfasern eine Proteinzusammensetzung nach Anspruch 10 oder eine durch das Verfahren nach Anspruch 11 wiederhergestellte Proteinzusammensetzung sind, die durch das Verfahren nach Anspruch 11 erzielt wird, und zum Herstellen eines Fleischprodukts, vorzugsweise eines Hackfleisch- oder Wurstprodukts verwendet wird.

13. Verfahren zum Herstellen eines Fleischprodukts, das Mischen der Proteinzusammensetzung nach Anspruch 10 oder der wiederhergestellten Proteinzusammensetzung, die nach dem Verfahren nach Anspruch 11 erzielt wird, in einer Fleischteigmasse umfassend.

14. Fleischprodukt, die Proteinzusammensetzung nach Anspruch 10 oder die wiederhergestellte Proteinzusammensetzung, die nach dem Verfahren nach Anspruch 11 erzielt wird, umfassend, wobei
- das Gewichtsverhältnis Fleisch: Proteinzusammensetzung vorzugsweise 95-20:5-80, besser noch 85-40:15-60, noch besser 80-65:20-35, am besten 75-70:25-30 beträgt,
- der Fettgehalt vorzugsweise 5-7 Gew.-% beträgt.

## Revendications

1. Procédé pour la préparation d'une composition de protéines comprenant des fibres de protéines provenant du plasma sanguin, comprenant les étapes qui consistent :
a. à fournir des protéines de plasma sanguin,
b. à préparer un milieu aqueux mixte en mélangeant, dans un milieu aqueux, les protéines de plasma sanguin de l'étape a. et un composant hydrocolloïdal dans un rapport pondéral du composant hydrocolloïdal sur les protéines allant de 1 : 12 à 1 : 160, le composant hydrocolloïdal comprenant de la gomme de xanthane, de la gomme gellane, des produits d'addition de celles-ci ou un mélange de celles-ci,
c. à amener le pH du milieu aqueux mixte de l'étape b. à une valeur allant de 3 à 5 en mélangeant dans le milieu aqueux mixte de l'étape b. un agent modulateur de pH pour permettre la formation de fibres dans le milieu, fournissant ainsi un milieu comprenant des fibres de protéines,
d. à fixer les fibres de protéines du milieu comprenant des fibres de protéines de l'étape c. pour fournir un milieu comprenant des fibre de protéines fixées.

2. Procédé selon la revendication 1, dans lequel :
- l'étape a. comprend le fait de fournir du plasma sanguin natif, et/ou
- l'étape a. comprend le fait de fournir du plasma sanguin concentré dilué, ayant de préférence une teneur en protéines allant de 6 à 8% p/p, et/ou
- les protéines dans l'étape a. et de préférence également dans les étapes b., c. et d. comprennent moins de 50% p/p, par rapport à la teneur totale en protéines, de protéines provenant d'une source autre que le plasma sanguin, lesdites étapes étant de préférence exemptes de telles protéines, et/ou
- l'étape a. comprend le fait de chauffer le plasma sanguin à une température allant de 65 à 75°C, de préférence de 70°C.

3. Procédé de l'une des revendications précédentes, dans lequel
- dans l'étape b. le composant hydrocolloïdal comprenant de la gomme de xanthane ou de la gomme gellane est fourni sous forme de dispersion ou de solution aqueuse, et/ou
- dans l'étape b. le composant hydrocolloïdal est mélangé sous forme de solution aqueuse, et/ou
- le rapport pondéral du composant hydrocolloïdal sur les protéines dans l'étape b. est de 1 : 14 à 100, de préférence 1 : 16 à 80, plus préférablement 1 : 18 à 60, idéalement 1 : 20 à 50, et/ou
- le milieu aqueux mixte de l'étape b. comprend 4,0 à 7,4% p/p de protéines, et/ou
- dans lequel le milieu aqueux mixte de l'étape b. comprend 0,025 à 0,65% p/p, de préférence 0,03 à 0,55% p/p de composant hydrocolloïdal, de préférence de la gomme de xanthane et des produits d'addition de celle-ci, plus préférablement de la gomme de xanthane.

4. Procédé de l'une des revendications précédentes, dans lequel les étapes a. et b. et de préférence également l'étape c. sont effectuées à une température comprise entre 0 et 25°C, de préférence entre 2 et 15°C, plus préférablement entre 5 et 10°C.

5. Procédé de l'une des revendications précédentes, dans lequel :
- le pH dans l'étape c. est amené à une valeur allant de 3,5 à 4,5, et/ou
- le pH dans l'étape c. est amené à la valeur envisagée en ajoutant au milieu aqueux mixte un ou plusieurs acide(s) de qualité alimentaire, de préférence choisi(s) dans le groupe constitué de l'acide chlorhydrique, de l'acide phosphorique, de l'acide sulfurique ou d'une combinaison de deux acides ou plus de ceux-ci, l'acide étant de préférence l'acide chlorhydrique, l'ajout de l'acide de qualité alimentaire étant de préférence effectué dans une durée inférieure à 60 minutes, de préférence inférieure à 45 minutes, plus préférablement inférieure à 30 minutes et encore plus préférablement inférieure à 15 minutes, et/ou
- l'acide est ajouté sous forme de solution aqueuse ayant une molarité allant de 0,2 à 5,0 M, de préférence allant de 2 à 4 M, et/ou
- le mélange du milieu aqueux mixte dans l'étape c. est effectué en agitant le milieu, de préférence par un agitateur rotatif ou en le faisant passer dans un mélangeur statique.

6. Procédé de l'une des revendications précédentes, dans lequel
- la fixation des fibres de protéines dans l'étape d. comprend le fait d'agréger et/ou de réticuler les fibres de protéines du milieu comprenant des fibres de protéines de l'étape c, et/ou
- dans lequel l'étape de fixation d. comprend le fait de chauffer le milieu comprenant des fibres de protéines de l'étape c. à une température allant de 50 à 100°C, de préférence allant de 65 à 80°C, et/ou
- dans lequel dans l'étape d. le milieu comprenant des fibres de protéines est chauffé pendant 10 à 60 minutes, de préférence pendant 25 à 40 minutes, et/ou
- dans lequel le milieu comprenant des fibres de protéines de l'étape c. est réticulé par ajout d'un agent de réticulation de protéines au milieu comprenant des fibres de protéines, l'agent de réticulation de protéines comprenant de préférence de la fumée liquide, la fumée liquide étant de préférence ajoutée à un pourcentage allant de 0,5 à 10% p/p, par rapport au poids total du milieu comprenant des fibres de protéines de l'étape c.

7. Procédé de l'une des revendications précédentes, comprenant en outre une étape e. qui consiste à amener le pH du milieu comprenant des fibres de protéines fixées de l'étape d. à une valeur allant de 5,0 à 8,0, de préférence allant de 5,5 à 6,5, plus préférablement allant de 5,8 à 6,2,
- le pH dans l'étape e. étant de préférence amené à la valeur envisagée en ajoutant au milieu comprenant des fibres de protéines fixées une ou plusieurs base(s) de qualité alimentaire, de préférence choisie(s) dans le groupe constitué de l'hydroxyde de sodium, de l'hydroxyde de potassium et de l'hydroxyde d'ammonium ou d'une combinaison de deux bases ou plus de celles-ci, la base étant de préférence ajoutée sous forme de solution aqueuse ayant une molarité allant de 2 à 11,5 M, de préférence allant de 4 à 5 M.

8. Procédé de l'une des revendications précédentes, comprenant en outre une étape f. comprenant le fait de séparer une fraction protéique contenant des fibres de protéines du milieu comprenant des fibres de protéines fixées après l'étape d. ou e.
- l'étape de séparation f. comprenant de préférence le fait de centrifuger le milieu comprenant des fibres de protéines fixées et d'éliminer le surnageant, et/ou
- la préparation de fibres de protéines séparées comprenant de préférence 8 à 20% p/p de protéines, plus préférablement 9 à 17% p/p.

9. Procédé de l'une des revendications précédentes, dans lequel le procédé comprend en outre :
- une étape g. qui consiste à laver les fibres de protéines,
et/ou
- une étape h. qui consiste à sécher les fibres de protéines,
- l'étape de séchage comprenant de préférence l'égouttage, le séchage
sur tambour ou le séchage sur bande,
- les fibres de protéines dans l'étape h. étant de préférence concentrées jusqu'à une teneur en humidité allant de 70 à 90% p/p, de préférence inférieure à 50% p/p, plus préférablement inférieure à 25% p/p, encore plus préférablement inférieure à 10% p/p, idéalement inférieure à 5% p/p.
et/ou
- une dernière étape de congélation de la composition de protéines comprenant des fibres de protéines.

10. Composition de protéines comprenant des fibres de protéines provenant du plasma sanguin, pouvant être obtenue par le procédé selon l'une des revendications précédentes,
- la composition ayant de préférence une teneur en humidité :
- allant de 70 à 90% p/p, ou
- inférieure à 70% p/p, de préférence inférieure à 50% p/p, plus préférablement inférieure à 25% p/p, encore plus préférablement inférieure à 10% p/p, idéalement inférieure à 5% p/p,
- la composition comprenant de préférence 8 à 20% p/p de protéines, de préférence 9 à 17% p/p.

11. Procédé de reconstitution d'une composition de protéines comprenant des fibres de protéines ayant une teneur en humidité allant de 70 à 90% p/p, comprenant l'étape qui consiste à réhydrater la composition de protéines de la revendication 10, ladite composition ayant une teneur en humidité inférieure à 70% p/p, de préférence inférieure à 50% p/p, plus préférablement inférieure à 25% p/p, encore plus préférablement inférieure à 10% p/p, idéalement inférieure à 5% p/p avant la réhydratation.

12. Utilisation de fibres de protéines dérivées du plasma sanguin pour la préparation d'un produit de viande, où les fibres de protéines représentent une composition de protéines de la revendication 10 ou une composition de protéines reconstituée telle qu'obtenue par le procédé de la revendication 11 pour la préparation d'un produit de viande, de préférence un produit de viande hachée ou de type saucisse.

13. Procédé pour la préparation d'un produit de viande, comprenant le fait de mélanger la composition de protéines de la revendication 10 ou la composition protéique reconstituée telle qu'obtenue par le procédé de la revendication 11 dans une pâte de viande.

14. Produit de viande comprenant la composition de protéines de la revendication 10 ou la composition de protéines reconstituée obtenue par le procédé de la revendication 11,
- le rapport pondéral viande : composition de protéines étant de préférence de 95 à 20 : 5 à 80, plus préférablement 85 à 40 : 15 à 60, encore plus préférablement 80 à 65 : 20 à 35, idéalement 75 à 70 : 25 à 30,
- ayant de préférence une teneur en matière grasse allant de 5 à 7% p/p.
